Europäisches Patentamt

European Patent Office

Office européen des brevets

(11) Veröffentlichungsnummer: **0 190 624 B1**

# EUROPÄISCHE PATENTSCHRIFT

(45) Veröffentlichungstag der Patentschrift: **15.04.92**

(21) Anmeldenummer: **86100943.9**

(22) Anmeldetag: **24.01.86**

(51) Int. Cl.5: **G01C 3/10**

(54) **Optisch-elektronischer Entfernungsmesser.**

(30) Priorität: **26.01.85 DE 3502634**

(43) Veröffentlichungstag der Anmeldung:
**13.08.86 Patentblatt 86/33**

(45) Bekanntmachung des Hinweises auf die
Patenterteilung:
**15.04.92 Patentblatt 92/16**

(84) Benannte Vertragsstaaten:
**DE FR GB SE**

(56) Entgegenhaltungen:
**DE-A- 3 216 246**
**FR-A- 2 429 442**
**FR-A- 2 554 244**
**US-A- 3 612 890**
**US-A- 4 283 146**

**V.D.I.-ZEITSCHRIFT, Band 125, Nr. 21, November 1983, Seiten 873-879, Düsseldorf, DE; U. BREITMEIER: "Einsatz opto-elektronischer Sensoren in der Fertigungsmesstechnik sowie zum Steuern von Robotern"**

(73) Patentinhaber: **Deutsche Forschungsanstalt**
**für Luft- und Raumfahrt e.V.**
**Linder Höhe Postfach 90 60 58**
**W-5000 Köln 90(DE)**

(72) Erfinder: **Dietrich, Johannes**
**Am Buchenstock 30**
**W-8031 Gilching(DE)**
Erfinder: **Hartmann, Bernd**
**Höhenweg 1**
**W-8911 Schwiftling(DE)**

(74) Vertreter: **von Kirschbaum, Albrecht,**
**Dipl.-Ing.**
**Hermann-Ehlers-Strasse 21a**
**W-8034 Germering(DE)**

# Beschreibung

Die Erfindung betrifft eine Entfernungsmeßanordnung mit optisch-elektronischen Entfernungsmessern zum Integrieren in einen Greifarm eines Roboters nach dem Oberbegriff des Anspruchs 1.

In DE-A 32 16 246, von welcher im Oberbegriff des Anspruchs 1 ausgegangen ist, ist eine automatische Entfernungsmeßeinrichtung für eine Kamera beschrieben, welche einen Lichtsender mit gut gebündeltem Lichtstrahl hoher Intensität und einen Lichtempfänger mit zugeordnetem, positionsempfindlichen Detektor enthält. Die Mittenachse des Lichtsenders und die optische Achse des Lichtempfängers schließen einen vorgegebener spitzen Winkel (90° - α) miteinander ein. Ferner ist dem lichtsender eine Regelelektronik und dem Lichtempfänger eine Verstörkerelektronik zugeschaltet. Bei dieser bekannten Entfernungsmeßeinrichtung kann im wesentlichen beinahe die gesamte Breite eines Kameragehäuses als Triangulationsbasis benutzt werden. Ferner brauchen bei einer solchen Meßeinrichtung die erzielbaren Meßergebnisse nicht übermäßig genau zu sein, da eine Meßgenauigkeit von einigen Prozent durchaus ausreichend ist. Ferner werden im allgemeinen mit solchen Meßeinrichtungen in Kameras Entfernungen von etwas weniger als 0,5m bis unendlich gemessen.

Ferner ist es bekannt, solche nach dem Triangulationsverfahren arbeitende, elektronische Entfernungsmeßsysteme oder dergl. auch an einem Roboterarm anzubringen. Hierbei können dann solche Systeme bei Industrierobotern zum Anpassen von Handhabungsvorgängen an variierende Bedingungen, wie Meßaufgaben, beispielsweise zur Vermessung von Karosserieteilen u.ä. dienen. (Siehe VDI - Z 125 (1983) Nr.21, 873 bis 879).

Ferner ist beispielsweise aus der US-A- 3 612 890 ein optisches Meßsystem bekannt, bei welchem ein Lichtstrahl auf die Oberfläche eines Objekts projiziert wird, um die Oberfläche mit einem kleinen Lichtpunkt zu beleuchten; die von der beleuchteten Oberfläche durch diffuse Reflexion reflektierten Lichtstrahlen werden eingefangen und entsprechend fokussiert, um dadurch ein dem Lichtpunkt entsprechendes Bild zu erzeugen, dessen Position zu der Position des beleuchteten Oberflächenbereichs entlang der Strahlachse in Position gebracht wird. Anschließend wird dann die Lichtposition elektrisch gefühlt und in ein entsprechendes elektrisches Positionssignal umgesetzt. Derartige Meßsysteme können in einer Vielzahl von Anwendungsfällen, einschließlich einer automatischen Steuerung von Bearbeitungsvorgängen, Dimensionsmessungen, Oberflächenkonturvermessungen u.ä. verwendet werden.

Durch die Erfindung soll daher eine Entfernungsmeßanordnung mit optisch-elektronischen Entfernungsmessern geschaffen werden, welche im Hinblick auf ihre An- oder Unterbringung in mehrfacher Ausführung, an bzw. in einem Robotergreifarm besonders klein ausgelegt sind, und mit deren Hilfe Annäherungen an zu erfassende Oberflächen oder Werkstücke beliebiger Beschaffenheit und Orientierung schnell und geregelt ausführbar sind, so daß dadurch innerhalb eines großen Meßbereichs bei gleichzeitig hoher Auflösung eine örtlich fein differenzierte, berührungslose Entfernungsmessung mit hoher Genauigkeit und Meßfrequenz ermöglicht ist.

Die Lösung dieser Aufgabe ist bei einer Entfernungsmeßanordnung mit optisch-elektronischen Entfernungsmessern durch die Merkmale im kennzeichnenden Teil des Patentanspruchs 1 erreicht. Vorteilhafte Weiterbildungen der Erfindung sind Gegenstand der abhängigen Patentansprüche.

Da die Sensorik der optisch-elektronischen Entfernungsmesser in einem Robotergreifarm unterbringbar und sogar integrierbar ist, können von dem Greiferarm aus berührungslos Entfernungsmessungen in mehreren Richtungen durchgeführt werden, so daß bei der Verwendung der erfindungsgemäßen Entfernungsmeßeinrichtung nicht nur die Einsatzbereiche, sondern auch die Bewegungsgeschwindigkeiten von Robotern wesentlich vergrößert bzw. erhöht werden können.

Vorzugsweise wird als Lichtsender eine GaAlAs-CW-Laserdiode verwendet, mit welcher eine Photodiode optisch gekoppelt ist. Zur Bündelung der von der Laserdiode abgegebenen divergenten Strahlung sind der Laserdiode eine hochbrechende Mikrolinse kurzer Brennweite nachgeschaltet, und mehrere vor der Linse als Strahlungsfallen angeordnete Blenden vorgesehen, durch welche die Abgabe unerwünschter, ungebündelter Strahlung reduziert wird, welche durch eine Dispersion an den durchstrahlten Oberflächen entsteht. Durch diesen Aufbau des Lichtsenders läßt sich ein annähernd paralleles Strahlungsbündel mit einer minimalen Divergenz von etwa 1 bis 2mrad und mit einem sehr kleinen Durchmeser (in der Größenordnung von 0,5 bis 1mm) erzeugen, so daß der Einsatz dieses Lichtsenders in der Praxis eine sehr feine örtliche Differenzierung der Entfernungsmessung erreichbar macht.

Ferner wird vorzugsweise als Lichtempfänger ein eindimensional messender, kleiner Positionsdetektor vorgesehen, dessen optische Fläche nur etwa 5mm x 2mm, d.h. 10mm² mißt, und vor welchem eine bikonvexe Linse oder ein bezüglich des Öffnungswinkelfehlers korrigiertes Linsensystem angeordnet ist. Durch Neigung der Detektoroberfläche gegenüber der optischen Achse der Linse bzw. des Linsensystems ist unabhängig von der Entfernung eines gestreuten Lichtpunktes eine möglichst scharfe Abbildung des Lichtpunktes auf der Detektoroberfläche und damit auf dem Detektor erreicht.

Um den Meßbereich des optisch-elektronischen Entfernungsmessers in weiten Grenzen einstellen zu können, ist in dem Lichtempfänger der positionsempfindliche Detektor in der berechneten, geneigten Ebene mechanisch verschiebbar angebracht.

Zur Ausbildung von zwei zueinander parallelen Entfernungsmessern können zwei Lichtsender symmetrisch zur Mittenachse eines gemeinsamen Detektorelements angeordnet sind, welchem zur scharfen Abbildung der von der Objektoberfläche reflektierten Strahlen jeweils unter entsprechenden Winkeln angeordnete Linsensysteme zugeordnet sind. Mit Hilfe dieser Anordnung kann dann auch der Winkel zu einer zu messenden Oberfläche erfaßt werden. Auch dieser Sensor mit zwei zueinander parallelen Entfernungsmeßanordnungen kann ohne Schwierigkeit entweder unmittelbar im Greiferarm oder aber im Bereich eines Greifers eines Roboters untergebracht werden.

Gemäß der Erfindung kann die vorstehend beschriebene Meßanordnung mit zwei Lichtsendern und einem Lichtempfänger zweimal vorgesehen sein, wobei die beiden Anordnungen unter einem Winkel von 90° zueinander angeordnet sind. Eine solche Anordnung eignet sich bei einem Meßbereich von etwa 0 bis 25mm zu einer unmittelbaren Integration in den Greiferbacken eines Roboterarms. Auch bei dieser Ausführungsform sind die gesamte Elektronik zur Steuerung der im Lichtsender verwendeten Leuchtdioden sowie die erforderlichen Operationsverstärker in dem gemeinsamen Gehäuse und damit in der Greiferbacke unterbringbar.

Bei Robotergreifern, bei welchen diese entfernungsmessenden Anordnungen in den Greiferbacken integriert sind, können mit insgesamt acht Meßstrahlen Abstände erfaßt werden. Dadurch wird der schnelle und genau regelbare Zugriff auf Objekte mit Robotern möglich, ohne daß bei diesen Bilderkennungssysteme vorgesehen sind. Insbesondere ergeben sich auch keine Schwierigkeiten aufgrund von Verdeckungen, weil sich die Sensoren in dem bewegten Greifer selbst befinden.

Ferner ist zur Vergrößerung des Leistungsbereichs einer GaAlAs-CW-Laserdiode in dem Gehäuse je des Lichtsenders noch eine Schaltungsanordnung aus einem Differenzverstärker und einem diesem nachgeschalteten Feldeffekttransistor vorgesehen. Mit Hilfe diese Schaltungsanordnung kann der Stromfluß durch jede Laserdiode so fein gesteuert werden, daß dadurch eine hochdynamische, in allen Betriebsbereichen stabil arbeitende Regelung geschaffen ist.

Ferner ist zur Stabilisierung der Leistungsabgabe der Laserdiode eine Gegenkopplungsschaltung vorgesehen, die so ausgelegt ist, daß die im Pulsbetrieb arbeitende Laserdiode stabil arbeitet und zwar insbesondere mit kurzen Einschwingzeiten bei sehr niedrigen abgegebenen Leistungen, und ohne daß es bei hohen Leistungen zu Über- oder Dauerschwingungen kommt.

Schließlich ist gemäß einer vorteilhaften Weiterbildung der Erfindung eine Schaltungsanordnung zur Signalaufbereitung von Strömen am Ausgang eines Lichtempfängers eines optisch-elektronischen Entfernungsmessers geschaffen, durch welche die beiden von positionsempfindlichen Detektoren abgegebenen Ströme entsprechend umgewandelt und in zwei gleichartigen, aber getrennten Kanälen so aufbereitet werden, daß an deren Ausgänge zwei zur Weiterverarbeitung vorgesehene Spannungen anliegen, welche frei von jeglichem Störlichtanteil sind.

Nachfolgend wird die Erfindung anhand von bevorzugten Ausführungsformen unter Bezugnahme auf die anliegenden Zeichnungen im einzelnen erläutert. Es zeigen:

Fig.1 schematisch die prinzipielle Zuordnung zwischen einem Lichtsender und einem Lichtempfänger bei einem optisch-elektronischen Entfernungsmesser

Fig.2 schematisch die prinzipielle Ausbildung eines in einem Entfernungsmesser verwendbaren Lichtempfängers;

Fig.3a und 3b schematisch nichtmaßstäbliche Ausführungen von in einem Entfernungsmesser verwendbaren Lichtsendern;

Fig.4 schematisch die prinzipielle Zuordnung zwischen einem in einem Lichtempfänger verwendeten Detektor und einer dem Detektor zugeordneten Optik;

Fig.5 schematisch stark vergrößert eine Schnittansicht einer Ausführungsform eines optisch-elektronischen Entfernungsmessers;

Fig.6 schematisch stark vergrößert eine Schnittansicht einer Anordnung von zwei Entfernungsmessern in einem gemeinsamen Gehäuse;

Fig.7 schematisch vergrößert eine perspektivische Ansicht von zwei unter einem Winkel von 90° zueinander angeordneten Entfernungsmessern der Fig.6;

Fig.8 schematisch eine Schaltungsanordnung zur elektronischen

Fig.9 Regelung einer Laserdiode in einem Lichtsender, und

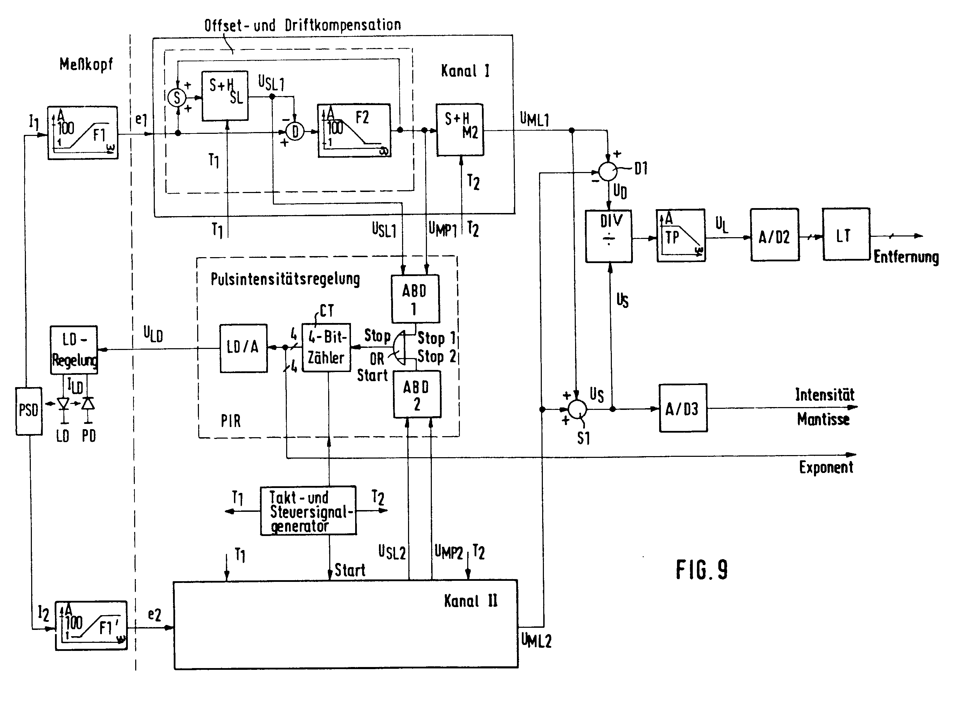

Fig.9 ein Blockschaltbild einer Schaltungsanordnung einer elektronischen Signalaufbereitung für optisch-elektronische Entfernungsmesser

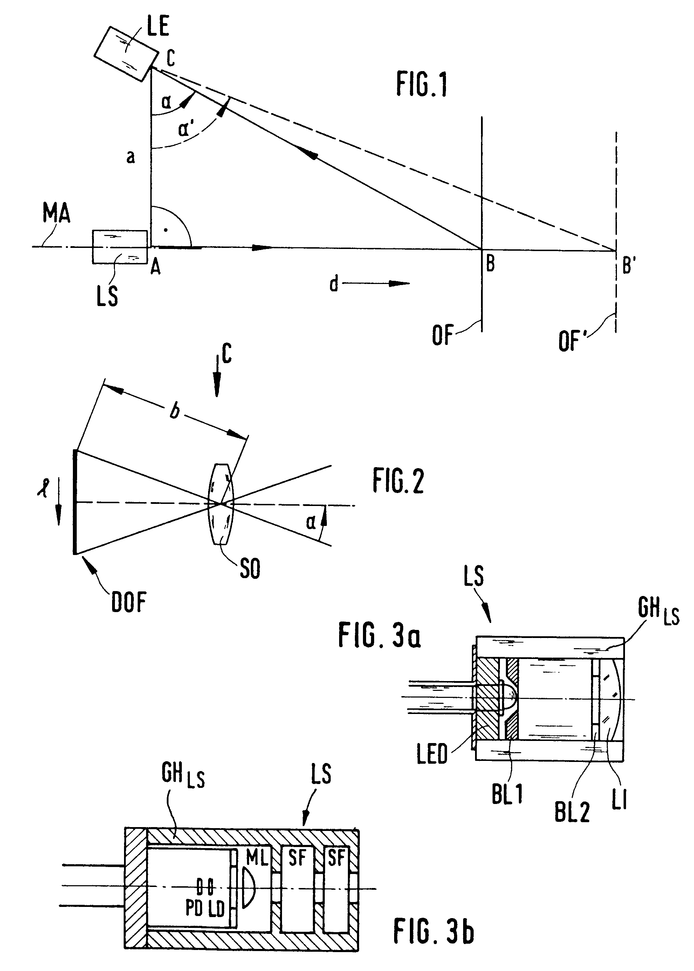

In Fig.1 ist schematisch das Funktionsprinzip eines Entfernungsmessers dargestellt sowie die prinzipielle Zuordnung zwischen einem Lichtsender und einem Lichtempfänger wiedergegeben. Der Entfernungsmesser arbeitet als Sensor nach einem geometrisch-optischen Meßverfahren, das als Triangulation bezeichnet wird. Bei diesem Meßverfahren wird das Messen einer Entfernung oder Länge durch die Bestimmung eines Winkels ersetzt. Hierdurch ist in dem vorgesehenen Meßbereich von bis zu 500mm die geforderte Genauigkeit erreichbar. Hierzu sind ein Lichtsender LS und ein Lichtempfänger LE in einem Basisabstand a voneinander angeordnet. Mit dem an einer Stelle A angebrachten Lichtsender LS wird mittels eines Lichtstrahls mit einem im ganzen Meßbereich möglichst kleinen Durchmesser ein Lichtpunkt an einer Stelle B bzw. B' auf eine nur angedeutete Objektoberfläche OF oder OF' projiziert. Die Strahlung wird an der Oberfläche entsprechend deren optischen Eigenschaften sowohl zurückgestreut als auch reflektiert und absorbiert.

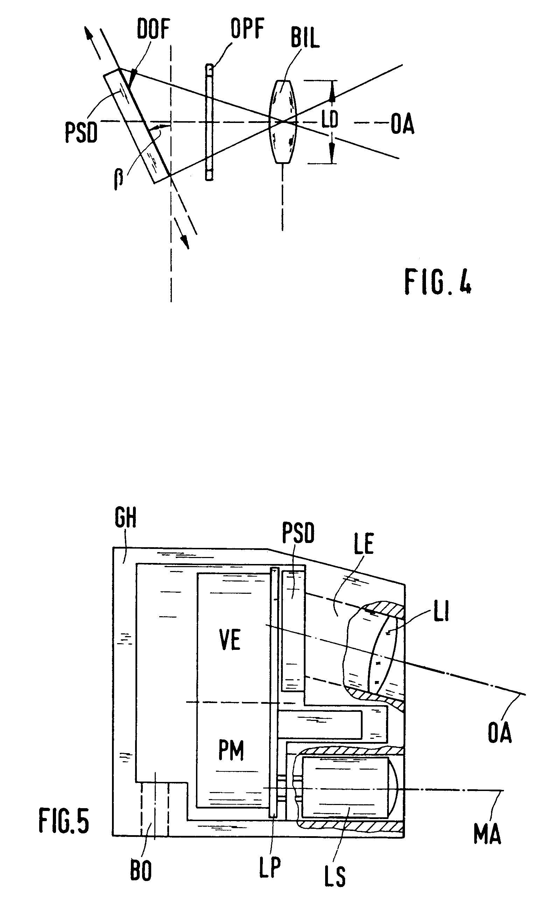

Ein Teil des an der angedeuteten Objektoberfläche OF oder OF' gestreuten Lichts wird in den an einer Stelle C angeordneten Lichtempfänger LE zurückgestreut. Die in den Lichtsender LE kommende Strahlung wird durch eine Sammeloptik SO gebündelt und auf der Oberfläche DOF eines sogenannten, linearen positionsempfindlichen Detektors PSD (siehe Fig.4) abgebildet. Aus den am Detektor PSD erhaltenen Signalen kann die Lage des Lichtpunktes bestimmt werden, und aus dessen Lage kann dann bei Kenntnis der geometrischen Parameter des Systems der Abstand d zu der zu messenden Objektoberfläche OF oder OF' berechnet werden.

Zwischen dem Abstand d der Objektoberfläche OF zum Lichtsender LS und einem Winkel $\alpha$ zwischen dem Basisabstand a (zwischen dem Lichtsender LS und dem Lichtempfänger LE) sowie dem von der Objektoberfläche OF zurückgestrahlten Lichtstrahl gilt folgende Beziehung:

$$d = a \cdot \tan \alpha$$

Der Winkel $\alpha$ wird hier indirekt dadurch gemessen, daß in dem Lichtempfänger LE an der Stelle C beispielsweise eine (nicht näher dargestellte ) Lochblende oder eine Sammeloptik (SO; Fig.2) angeordnet ist, durch bzw. über welche der auf die Objektoberfläche OF projizierte Lichtpunkt auf die Oberfläche DOF des in dem Lichtempfänger LE untergebrachten, positionsempfindlichen Detektor PSD (Fig.4) abgebildet wird, wie schematisch in Fig.2 dargestellt ist. Hierbei ergibt sich die Lage $\ell$ des abgebildeten Lichtpunktes auf der Detektoroberfläche DOF aus dem Winkel $\alpha$ auf folgende Weise:

$$\ell = b \cdot \sin \alpha$$

wobei b ein Parameter ist, welcher den Abstand zwischen einer Lochblende bzw. dem Mittelpunkt der Sammeloptik SO und der Detektoroberfläche entspricht.

Mit dem Lichtsender LS muß ein möglichst gut gebündelter Lichtstrahl hoher Intensität erzeugt werden können, damit auch die Entfernung zu schlecht reflektierenden und/oder schräg stehenden Oberflächen mit einem räumlich hohen Auflösungsvermögen gemessen werden kann. Es bietet sich daher die Verwendung einer speziellen Leuchtdiode LED an, wobei sich als besonders geeignet eine GaAlAs-Leuchtdiode herausgestellt hat, wie sie beispielsweise unter der Serienbezeichnung HLPXXR von der Fa. Hitachi angeboten wird. Solche Leuchtdioden geben aufgrund ihres Aufbaus und aufgrund der geometrischen Form ihres lichtemittierenden Teils eine sehr hohe Strahlungsleistung bei einer kleinen lichtemittierenden Fläche ab. Noch dazu läßt sich die Strahlungsleistung durch einen Pulsbetrieb auf das etwa 10-fache steigern.

Der Aufbau eines Lichtsenders LS ist schematisch in Fig.3a dargestellt. Hierbei sind eine lichtemittierende Leuchtdiode LED an dem einen, in Fig.3 linken Ende und eine plankonvexe Linse LI bzw. eine entsprechende Linsenanordnung am anderen - in Fig.3 rechten - Ende eines vorzugsweise kreiszylindrischen Gehäuses GH$_{LS}$ aus Aluminium untergebracht. Durch die plankonvexe Linse LI wird die von der Leuchtdiode LED emittierte Strahlung gebündelt. Nahe bei der Leuchtdiode LED ist zwischen dieser und der Linse LI eine Blende BL1 angebracht, welche die Aussendung von Strahlung verhindert, die nicht direkt von dem Leuchtdiodenkristall LED kommt. Das Vorsehen der Blende BL1 ist notwendig, um auf der zu messenden Objektoberfläche einen kleinen und scharfen Lichtfleck zu erhalten. Unmittelbar an der der Leuchtdiode zugewandten Fläche der plankonvexen Linse LI ist eine weitere Blende BL2 vorgesehen, welche für einen kleinen Lichtstrahldurchmesser in der unmittelbaren Nähe des Lichtsenders LS sorgt.

Wie in Fig.3b dargestellt, ist in einem Lichtsender LS eine GaAlAs-CW-Laserdiode LD mit einer optisch gekoppelten Photodiode PD vorgesehen, die in einem ebenfalls vorzugsweise kreiszylindrischen Gehäuse untergebracht ist. Die von der Laserdiode LD divergent abgegebene Strahlung wird mittels einer einzigen, hochbrechenden Mikrolinse ML mit kurzer Brennweite gebündelt. Mehrere vor der Mikrolinse ML als Strahlungsfallen angeordnete Blenden SF reduzieren die Abgabe von unerwünschter ungebündelter Strahlung, welche durch Dispersion an den durchstrahlten Flächen entsteht. Mit der in Fig.3b dargestellten Anordnung ist ein annähernd paralleles Strahlungsbündel (mit einer Divergenz von etwa 1 bis 2mrad) mit einem sehr kleinen Durchmesser (von etwa 0,5 bis 1mm) erzeugt.

Von dem Lichtempfänger LE muß ein Teil der an der zu messenden Objektoberfläche OF (OF') zurückgestrahlten Strahlung empfangen werden, damit der Winkel, unter welchem die Strahlung auf den Empfänger LE auftrifft, gemessen werden kann. Dazu ist als positionsempfindliches Empfangselement der kleine, eindimensional messende, sogenannte Positionsdetektor PSD verwendet, vor welchem ein optisches Filter OPF und eine bikonvexe Linse BIL bzw. ein bezüglich seines Öffnungswinkels korrigiertes Linsensystem angeordnet ist (siehe die schematische Darstellung in Fig.4).

Da Positionsdetektoren PSD mit sehr kleinen, aktiven Flächen verwendet werden, sind, um einen großen Meßbereich zu erhalten, Linsensysteme mit kurzer Brennweite, aber mit großem Durchmesser erforderlich. Da sich bei herkömmlichen Anordnungen bezüglich einer scharfen Abbildung eines Lichtpunktes auf der Detektoroberfläche Schwierigkeiten ergeben, ist die Detektoroberfläche DOF unter einem Winkel $\beta$ ( $<90°$ ) zur optischen Achse OA angeordnet. Die Detektoroberfläche DOF des Positionsdetektors PSD ist gegen die optische Achse OA der bikonvexen Linse bzw. des Linsensystems so geneigt, daß unabhängig von der Entfernung des gestreuten Lichtpunkts eine möglichst scharfe Abbildung desselben auf dem Detektor PSD erreicht wird. Hierbei sind allerdings auch die höheren Reflexionsverluste bei einer nicht senkrechten Bestrahlung des Detektors PSD zu berücksichtigen.

Die optimale Detektoranordnung wird aus den Abbildungsparametern des Linsensystems und dem gewünschten Meßbereich errechnet. Der Linsendurchmesser LD der bikonvexen Linse BIL bzw. des Linsensystems bestimmt hierbei die Strahlungsempfindlichkeit des Lichtempfängers LE und sollte so groß gewählt werden, wie es hinsichtlich der Baugröße des Entfernungsmessers nur irgendwie möglich ist. Vorzugsweise ist der Positionsdetektor PSD in den durch zwei Pfeile angedeuteten Richtungen mechanisch verschiebbar, so daß der Meßbereich in weiten Grenzen einstellbar ist. Der vorzugsweise verwendete Positionsdetektor PSD liefert zwei Ausgangsströme, aus welchen die Lage eines abgebildeten Lichtpunktes berechnet werden kann, wie nachstehend noch im einzelnen beschrieben wird.

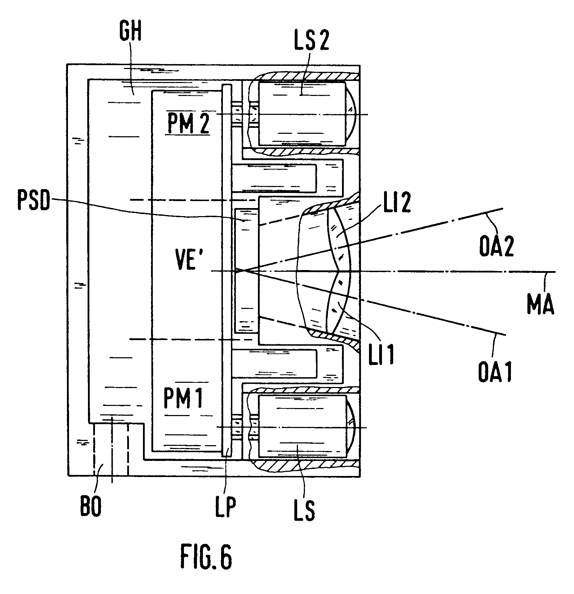

In Fig.5 ist in einem erheblich größeren Maßstab schematisch eine Ausführungsform eines optisch-elektronischen Entfernungsmessers dargestellt. Hierbei sind in einem gemeinsamen etwa (35 x 35 x 14)mm³ großen, widerstandsfähigen Gehäuse GH vorzugsweise aus Aluminium der in Fig.3a oder 3b in einer Schnittansicht schematisch dargestellte Lichtsender LS sowie ein in Fig.4 schematisch dargestellter Lichtempfänger LE angeordnet. Durch eine entsprechende Wahl des im Lichtempfänger LE verwendeten Linsensystems und durch eine entsprechende Bemessung der lichtaufnehmenden Fläche des Positionsdetektors PSD steht ein Meßbereich von etwa 30mm bis 500mm zur Verfügung.

In dem gemeinsamen Gehäuse GH sind neben dem Lichtsender LS und dem Lichtempfänger LE auch noch eine nachstehend noch im einzelnen beschriebene Elektronik PM für die Regelung der im Lichtsender LE vorzugsweise verwendeten Laserdiode LD sowie eine Verstärkerelektronik E mit zwei vorzugsweise schnellen Operationsverstärkern untergebracht, mittels welchen die vom Positionsdetektor PSD erhaltenen Ströme in proportionale Spannungen umgewandelt werden. Auf der dem Lichtsen-der LS und dem Lichtempfänger LE abgewandten Seite des Gehäuses GH ist gestrichelt eine Bohrung BO für eine Kabeleinführung für ein Kabel angedeutet, über welches der Meßkopf des optisch-elektronischen Entfernungsmessers mit einer Signalverarbeitungseinheit verbunden ist.

In Fig.6 ist schematisch in einem erheblich größeren Maßstab eine Anordnung von zwei Entfernungsmessern dargestellt. Hierbei sind zwei Lichtsender LS1 und LS2 um einen gemeinsamen Positionsdetektor PSD angeordnet, welchem zwei Linsen LI1 und LI2 zugeordnet sind. Die beiden Lichtsender LS1 und LS2 sind hierbei symmetrisch zu der Mittenachse MA des Detektorelements PSD angeordnet. Die beiden Lichtsender LS1 und LS2, das Detektorelement PSD mit den zwei ihm zugeordneten Linsen LI1 und LI2 sowie die jedem Lichtsender zugeordnete Regelelektronik PM1 bzw. PM2 einschließlich der dem Detektorelement PSD zugeordneten Verstärkerelektronik VE', wobei die Elektronik (PM1, PM2, VE') auf einer gemeinsamen Leiterplatte LP angeordnet ist, sind wiederum in einem gemeinsamen Gehäuse GH' vorzugsweise aus Aluminium untergebracht. Auch in Fig.6 ist links unten gestrichelt wieder eine Bohrung BO für eine Kabeleinführung angedeutet.

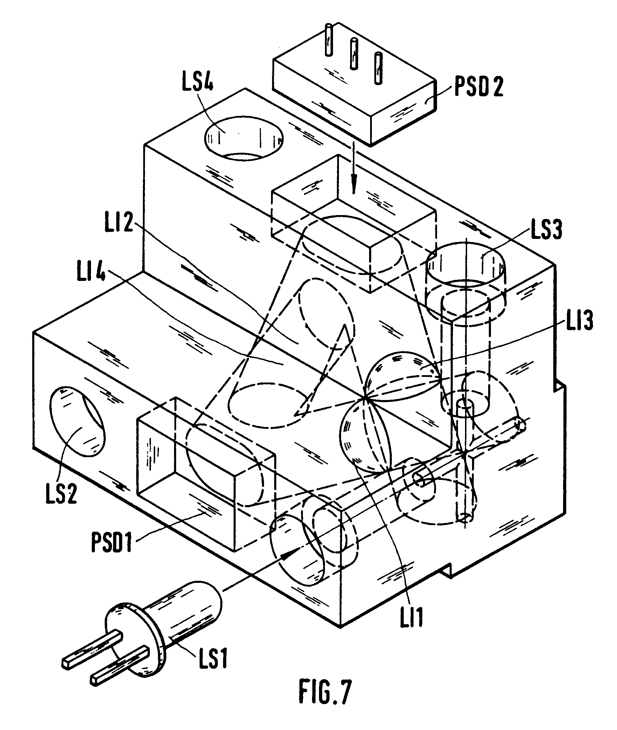

Der in Fig.6 dargestellte Entfernungsmesser enthält somit zwei zueinander parallele Entfernungsmesser. Damit ist es möglich, auch den Winkel zu einer zu messenden Oberfläche zu erfassen und zu bestimmen. Hierzu braucht also lediglich der anhand von Fig.5 beschriebene Entfernungsmesser oder Sensor um einen Lichtsender (LS1 oder LS2) mit zugehöriger Regelelektronik (PM1 oder PM2) ergänzt zu werden. Ein Prototyp eines entsprechend der schematischen Darstellung von Fig.6 hergestellten Gehäuses GH' zur Unterbringung eines Sensors mit zwei Meßstrahlen hatte die Außenmaße (50 x 35 x 17)mm³; es kann somit problemlos im Greiferbereich eines Roboters untergebracht werden. Zwei der in Fig.6 dargestellten Entfernungsmeßsysteme mit jeweils zwei Meßstrahlen sind in Fig.7 unter einem Winkel von 90° so zueinander angeordnet, daß die Strahlengänge der Lichtsender LS1 bis LS4 und der Lichtempfänger PSD1 und PSD2 über verschiedene Linsenanordnungen LI1 bis LI4 so ineinander verflochten sind, wie in der schematischen Darstellung der Fig.7 angedeutet ist. Hierbei sind in Fig.7 zur Vereinfachung der zeichnerischen Darstellung lediglich der Lichtempfänger PSD2 sowie der Lichtsender LS1 als einführbare Steckmodule mit angedeuteten Steckerstiften wiedergegeben. Entsprechende Steckmodule sind natürlich auch für die übrigen Lichtsender LS2 bis LS4 und für den Lichtempfänger PSD1 vorgesehen.

Die in Fig.7 dargestellte Anordnung ist für einen Meßbereich 0mm bis 25mm zur Integration in die Greiferbacken eines Roboters entwickelt worden. Bei einer solchen Anwendung kann jeweils auf eine Sammellinse in den Lichtsendern LS1 bis LS4 verzichtet werden. Die gesamte Elektronik zur Ansteuerung der Lichtsender LS1 bis LS4 sowie die jeweiligen Operationsverstärker sind ebenfalls in einem Robotergreifer untergebracht.

Mit einem Robotergreifer, bei dem solche entfernungsmessenden Sensoren nach Fig.7 in jeder der beiden Greiferbacken angeordnet sind, können mit insgesamt acht Meßstrahlen Abstände erfaßt werden. Dadurch ist ein schneller und genau regelbarer Zugriff auf Objekte mit Robotern ohne Bilderkennungssysteme möglich. Insbesondere ergeben sich keine Probleme durch Ver- oder Abdeckungen, weil sich die Sensoren im bewegten Robotergreifer, d.h. in dessen Greiferbacken befinden bzw. dort integriert sind.

Die Abmessungen eines Prototyps der optischen Entfernungsmeßanordnung nach Fig.7 für vier Meßstrahlen betragen (19 x 19 x 28)mm³. Ein kompletter Greiferbacken kann dann in einer Größe von (60 x 37 x 30)mm³ aufgebaut werden.

Da die Art und Weise sowie die Qualität der Signalaufbereitung entscheidend den maximal möglichen Verwendungsbereich sowie die erreichbare Meßgenauigkeit eines optischelektronischen Entfernungsmessers bestimmen, wird anhand eines in Fig.9 wiedergegebenen Blockschaltbilds einer Schaltungsanordnung die gesamte Signalaufbereitung bis zur Bildung eine digitalen Entfernungsmeßwerts beschrieben. Die Meßanordnung arbeitet mit einem gepulsten Lichtsender, damit im Lichtempfänger Licht vom Lichtsender, welches im folgenden auch als Meßlicht ML bezeichnet ist, von Licht, welches aus der Umgebung auf den Detektor PSD fällt und das im folgenden als Störlicht SL bezeichnet wird, unterschieden werden kann.

Bei einem Betrieb von CW-Laserdioden mit Impulsen in einem breiten Leistungsbereich ergeben sich große Schwierigkeiten aufgrund der starken Temperaturabhängigkeit der Strom/Leistungskennlinie. Diese Kennlinie weist eine starke Nichtlinearität an dem Betriebspunkt auf, bei welchem die Diode beginnt, kohärente Laserstrahlung zu emittieren. Unterhalb dieses Betriebspunktes arbeitet eine Laserdiode wie eine Leuchtdiode. Da jedoch die Laserdiode durch eine übergeordnete Steuerung in einem Leistungsbereich von mindestens 1:1000 betrieben werden soll, der Leistungsbereich im Laserbetrieb aber nur etwa 1:10 beträgt, ist eine hochdynamische, in allen Betriebsbereichen stabil arbeitende Regelungs- Schaltungsanordnung erforderlich. Hierbei wird die von der Laserdiode abgegebene Strahlungsleistung mit einer eingebauten Photodiode PD gemessen und dann der Laserdiodenstrom so geregelt, daß die Strahlungsleistung des abzugebenden Impulses linear von der Pulshöhe der Steuerspannung $U_{LD}$ abhängig wird. Durch die Regelschaltung wird der Diodenstrom so schnell eingeregelt, daß die Strah- lungsleistung nach etwa $5\mu s$ auf ihren nunmehr temperaturunabhängigen Wert eingestellt ist.

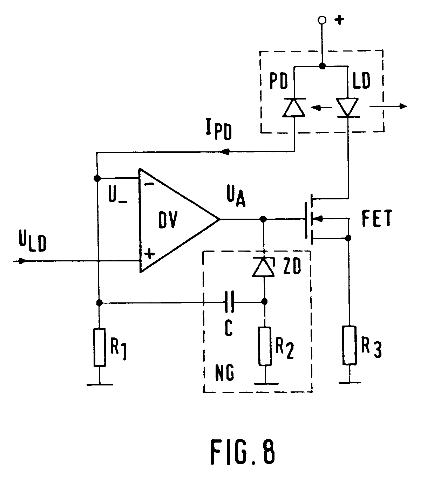

Der Aufbau und die Arbeitsweise einer solchen Regelungsschaltungsanordnung wird nunmehr anhand von Fig.8 beschrieben. Die bereits erwähnte Steuerspannung $U_{LD}$ liegt an einem positiven Eingang eines schnellen Differenzverstärkers DV an, von welchem das Gate eines Feldeffekttransistors FET angesteuert wird, mit welchem wiederum der Stromfluß durch die Laserdiode LD beeinflußt wird. Proportional zu der von der Laserdiode LD erzeugten und abgegebenen Strahlung ändert sich ein Strom $I_{PD}$, welcher die Photodiode PD durchfließt. Dieser Strom $I_{PD}$ erzeugt an einem Widerstand $R_1$ eine Spannung U, welche an dem anderen negativen Eingang des Differenzverstärkers DV anliegt. Auf diese Weise ist ein Regelkreis geschlossen.

In dem Differenzverstärker DV wird die Spannung U von der Steuerspannung $U_{LD}$ subtrahiert, so daß bei größer werdender Spannung U die das Gate des Feldeffektransistors FET ansteuernde Ausgangsspannung $U_A$ des Differenzverstärkers DV sinkt. Hierdurch sinkt dann auch der Strom durch die Laserdiode LD, wodurch dann die Strahlungsleistung und schließlich der Strom $I_{PD}$ durch die Photodiode PD sinkt. Als Folge hiervon sinkt auch die Spannung U, und zwar solange, bis sich in dem Differenzverstärker DV ein stationärer Zustand

$U_{LD}$ = U eingestellt hat.

Die vorstehend beschriebene Regelungsschaltungsanordnung für Pulsbetrieb kann jedoch für einen breiten Leistungsbereich der Laserdiode LD nicht so ausgelegt werden, daß sie mit kurzen Einschwingzeiten bei sehr niedrigen Leistungen, aber auch ohne Über- oder gar Dauerschwingungen bei hohen Leistungen arbeitet, die die Laserdiode LD schnell zerstören würden. Eine stabile Arbeitsweise ist erst durch Hinzufügen einer gestrichelt eingerahmten, nicht linear arbeitenden Gegenkopplung NG erreicht. Die Gegenkopplung weist als nichtlineares Element eine Zenerdiode ZD, sowie einen Widerstand $R_2$ und einen Kondensator C auf.

Die Gegenkopplung NG erfüllt in der Regelungsschleife zwei Funktionen, und zwar in Abhängigkeit davon, ob die Spannung $U_A$ am Ausgang des Differenzverstärkers DV kleiner oder größer als die Durchbruchspannung $U_{ZD}$ der Zenerdiode ZD ist:

1. Wenn die Ausgangsspannung $U_A$ kleiner als die ZenerdiodenDurchbruchspannung $U_{ZD}$ ist, (d.h. $U_A < U_{ZD}$) ist der Kondensator C in Reihe mit dem Widerstand $R_2$ zu dem Widerstand $R_1$ parallel geschaltet; hierbei ist der Widerstand $R_2$ wesentlich kleiner bemessen als $R_1$, (d.h. $R_2 << R_1$). Bei schnellen Änderungen der Laserdioden-Steuerspannung $U_{LD}$ ergibt sich dadurch eine schnellere Änderung der Ausgangsspannung $U_A$ des Differenzverstärkers, als wenn die Gegenkopplung NG nicht vorgesehen ist, weil für hohe Frequenzen die sogenannte Kreisverstärkung vergrößert wird.

2. Wenn die Ausgangspannung $U_A$ des Differenzverstärkers DV größer als die Zenerdioden-Durchbruchspannung $U_{ZD}$ ist, (d.h. $U_A > U_{ZD}$), ist die Zenerdiode ZD durchgeschaltet, so daß sich Änderungen an der Ausgangsspannung $U_A$ des Differenzverstärkers über den Kondensator C sofort auf die Spannung U auswirken, wodurch für hohe Frequenzen die Kreisverstärkung reduziert wird; hierdurch ist aber einer Überschwingen der Ausgangsspannung $U_A$ des Differenzverstärkers und damit des Laserdioden-Stroms verhindert.

Wie bereits mehrfach erwähnt, wird die Position eines Lichtpunktes auf der Objektoberfläche OF bzw. OF' mittels eines sogenannten positionsempfindlichen Detektors PSD erfaßt; der Detektor liefert dann zwei Ausgangsströme, aus welchen die Lichtpunktlage auf dem Detektor ermittelt wird. Diese Ströme werden noch im Meßkopf in jeweils einem Transimpedanzverstärker in Spannungen $e_1$ und $e_2$ umgewandelt, so daß eine Signalübertragung über ein Kabel zur weiteren Verarbeitung ermöglicht ist. Da außer dem von dem Lichtsender LS abgegebenen Meßlicht trotz einer optischen Filterung vor dem Detektor PSD auch Fremdlicht aus der Umgebung auf diesen auftrifft, besteht die Gefahr, daß die Transimpedanzverstärker übersteuert werden, und zwar insbesondere deshalb, da die Störlichtintensität bis zu 100 mal höher sein kann als der den Lichtempfänger LE erreichende Meßlichtanteil.

Aus diesem Grund sind die Transimpedanzverstärker mit Hochpaßfiltern F1 und F1' (Fig.9) versehen, durch welche niederfrequente Stromanteile abgeschwächt, hochfrequente Stromanteile jedoch hochverstärkt in proportionale Spannungen umgewandelt werden. Die durch die Filterung hervorgerufene Verzerrung des empfangenen Impulses wird durch ein inverses Filter F2 (Fig.9) in der Signalaufbereitung wieder rückgängig gemacht.

Damit keine Meßfehler entstehen, sind die Transimpedanzverstärker so ausgeführt, daß die beiden Detektoranschlüsse auf exakt dem gleichen Spannungspotential gehalten werden. Eine Schaltungsanordnung zur elektronischen Signalaufbereitung ist in Form eines Blockschaltbildes in Fig.9 dargestellt.

Die mittels der Transimpedanzverstärker umgewandelten Spannungen $e_1$ und $e_2$ werden in zwei getrennten Kanälen I und II so aufbereitet, daß an deren Ausgängen zwei Spannungen $U_{ML1}$ und $U_{ML2}$ zur Weiterverarbeitung anliegen, welche frei von jeglichem Störlichtanteil sind. Nachstehend wird die Arbeitsweise für Kanal I beschrieben, welcher drei Funktionsblöcke aufweist, nämlich einen sogenannten Sample-Hold-Block S&H$_{SL}$ für die Störlichtspannung $U_{SL1}$, ein Filter F2 und einen weiteren Sample-Hold-Block S&H$_{ML}$ für die Meßlichtspannung $U_{ML1}$.

Die Sample-Hold-Blöcke haben zwei Betriebsarten. Bei der Betriebsart Sample ist die Eingangsspannung auf den Ausgang durchgeschaltet, während in der Betriebsart Hold die Ausgangsspannung der Eingangsspannung entspricht, die vor dem Umschalten auf die Betriebbsart Hold am Eingang anlag. Das Filter F2 hat eine dem Filter F1 im Meßkopf des optisch-elektronischen Entfernungsmessers inverse Filtercharakteristik. Dadurch ist insbesondere erreicht, daß am Filterausgang genau die Impulsform erhalten wird, mit welcher der Lichtsender LS seine Impulse aussendet.

Die erwähnte Eingangsspannung $e_1$ wird über einen Summenverstärker S an den Sample-Hold-Block S&H$_{SL}$ für die Störlichtspannung $U_{SL1}$ sowie über den positiven Eingang eines Differenzverstärkers D an das Filter F2 angelegt. Der negative Eingangsanschluß des Differenzverstärkers D ist mit dem Ausgang des Sample-Hold-Blocks S&H$_{SL}$ verbunden.

Das Ausgangssignal des Filters F2 wird einerseits an den zweiten Sample-Hold-Block S&H$_{ML}$ angelegt und andererseits an den Summenverstärker zurückgeleitet. Hierdurch ergeben sich zwei Funktionen, die von der Betriebsart des Sample-Hold-Blocks S&H$_{SL}$ abhängen:

1. Wenn der Sample-Hold-Block S&H$_{SL}$ sich in der Betriebsart Sample befindet, liegt an seinem Ausgang die Spannung e$_1$ und daher an beiden Eingängen des Differenzverstärkers D die gleiche Spannung an, weshalb die Eingangsspannung am Filter F2 im Idealfall null sein muß. Allerdings ist sie aufgrund von Offset- und Temperaturdriftspannungen in den Differenzverstärkern nie null. Aus diesem Grund ist eine Rückführung der Fehlerspannung vorgesehen. Aufgrund der Filtercharakteristik des Filters F2 werden die niedrfrequenten Fehlerspannungen hochverstärkt und dann vom Filterausgang an den Summenverstärker S zurückgeleitet. Auf diese Weise werden in der Betriebsart Sample des Sample-Hold-Blocks S&H$_{SL}$ alle Fehler am Eingang des Filters F2 auf null heruntergeregelt.

2. Wenn nun der Sample-Hold-Block S&H$_{SL}$ in die Betriebsart Hold geschaltet wird, speichert er die Spannung, welche gerade durch Störlicht erzeugt wird und trennt dadurch den Fehlerspannungs-Regelkreis auf. Der Lichtsender LS gibt dann einen Meßlichtimpuls ab, so daß eine Spannung, die sich aus einem Störlicht- und einem Meßlichtanteil zusammensetzt, an den Differenzverstärker D angelegt wird. In dem Differenzverstärker D wird der zuvor in dem Sample-Hold-Block S& H$_{SL}$ gespeicherte Störlichtanteil vom Eingangssignal e$_1$ abgezogen, so daß der reine Meßlichtanteil das Impulsformerfilter F2 durchläuft und an den Sample-Hold-Block S&H$_{ML}$ angelegt wird, der zur Erfassung der Spannung U$_{MP1}$ auf die Betriebsart Sample geschaltet ist. Kurz vor dem Ende des Meßlichtimpulses wird der Sample-Hold-Block S&H$_{ML}$ wieder in die Betriebsart Hold geschaltet.

Am Ausgang der Sample-Hold-Blöcke S&H$_{ML}$ der Kanäle I und II liegen dann bis zum Eintreffen des nächsten Meßlichtimpuls es die Meßlichtspannungen U$_{ML1}$ und U$_{ML2}$ stabil an, die in nachstehend beschriebener Weise weiterverarbeitet werden.

Die Intensität des von einem Lichtsender ausgesendeten Lichtimpulses hängt wesentlich von den optischen Eigenschaften der zu messenden Oberfläche ab. Entscheidend für das Meßergebnis ist hierbei, daß das in dem Lichtempfänger LE zurückkommende Meßlicht einerseits genügend stark ist, um gegenüber dem Rauschanteil auswertbar zu sein, andererseits aber auch nicht so stark ist, daß der Empfänger übersteuert wird, da dann eine Auswertung der Signale unmöglich wird. Bei den bekannten Anordnungen wird daher eine einfache Regelung vorgenommen, durch die der Sender so geregelt wird, daß die Empfängerpegel im zeitlichen Mittel in einem zweckmäßigen Bereich liegen. (Eine solche Regelung kann beispielsweise mit einem I-Regler durchgeführt werden.) In diesem Zusammenhang sei nochmals darauf hingewiesen, daß die hier gemachten Aussagen sich nur auf gepulste Meßsysteme mit hohen Meßraten beziehen, bei welchen also entsprechend kurze Impulse verwendet werden müssen.

Alle bekannten und hierfür verwendeten Senderregelungen weisen den großen Nachteil auf, daß sie auf schnelle Änderungen der Reflexionseigenschaften nicht sofort ansprechen können und dadurch immer wieder einige Messungen außerhalb des auswertbaren Bereichs liegen. Hierdurch wird das Meßergebnis insbesondere dann verfälscht, wenn hohe Meßraten benötigt werden, weil dann eine großzügige Meßwertfilterung unzulässig ist. Eine herkömmliche Regelung für jeden einzelnen Impuls scheidet aus, da die in dem Regelkreis insbesondere durch den Detektor PSD vorhandenen Zeitkonstanten ein Einschwingen innerhalb einer kurzen Impulsdauer von etwa 20μs unmöglich machen.

In einem zusätzlichen Regelkreis wird daher ein Digital/Analogwandler L D/A durch eine Zählschaltung, beispielsweise einen 4 Bit-Zähler CT so angesteuert, daß am Ausgang des Digital/Analogwandlers LD/A eine treppenförmige Spannung, nämlich die Laserdioden-Steuerspannung U$_{LD}$, erzeugt wird, deren Stufenhöhe sich von Stufe zu Stufe verdoppelt. Jedem der beiden Kanäle I und II ist ein sogenannter Aussteuer-bereichsdetektor ABD zugeordnet, welcher den verfügbaren Aussteuerbereich des Verstärkers überprüft, wobei der Störlichtpegel berücksichtigt wird.

Sobald ein bestimmter Pegel am Ausgang des Filters F2 erreicht wird, erzeugt der Aussteuerbereichsdetektor ABD1 ein Stoppsignal STOP1, welches über ein ODER-Glied OR an den Zähler CT angelegt wird. Hierdurch wird dann die Spannung U$_{LD}$ konstant gehalten, und alle Signale können auf den Endwert einschwingen, bevor durch Rücksetzen des Zählers CT die Laserdioden-Steuerspannung U$_{LD}$ wieder null wird, wodurch dann der Lichtimpuls beendet wird. Zum vollständigen Durchfahren der Treppenfunktion werden nur etwa 8μs benötigt; zum Einschwingen verbleiben also etwa 12μs. Die im Meßkopf des optisch-elektronischen Entfernungsmessers gemäß der Erfindung eingebaute Laserdiodenregelung (siehe Fig.8) sorgt nunmehr dafür, daß die Laserdiode LD auch die der Steuerspannung entsprechende Strahlungsleistung abgibt.

Aus den beiden Spannungen U$_{ML1}$ und U$_{ML2}$ am Ausgang der beiden Kanäle I und II wird nach der einfachen mathematischen Beziehung U$_L$ = (U$_{ML1}$ - U$_{ML2}$)/(U$_{ML1}$ + U$_{ML2}$) die die Lage eines Lichtpunktes auf dem Detektor PSD repräsentierende Spannung $U_L$ ermittelt. Hierbei ist für die Meßgenauigkeit des Systems entscheidend, wie gut dieser Quotient technisch gebildet werden kann. Bekannte Systeme weisen analoge Dividierbausteine auf oder legen beide Eingangsspannungen an einen speziellen Analog/Digitalwandler an, an dessen Ausgang dann der Lagewert digital anliegt. Die beiden bekannten Lösungen haben den Nachteil, daß für kleine Spannungspegel der Lagewert nur sehr ungenau gebildet wird.

Gemäß der Erfindung werden daher die Ausgangsspannungen $U_{ML1}$ und $U_{ML2}$ der beiden Kanäle I und II in einem Summenverstärker S1 summiert bzw. in einem Differenzverstärker D1 subtrahiert; eine Ausgangsspannung $U_S$ des Summenverstärkers S1 und eine Ausgangsspannung $U_D$ des Differenzverstärkers D1 werden zur Quotientenbildung an eine Dividiereinheit DIV angelegt, in welcher die Division über logarithmische Funktionen durchgeführt wird, so daß noch etwa einhundertfach kleinere Pegel als mit den bisher bekannten Anordnungen auswertbar sind. Gleichzeitig kann die zulässige Frequenz der Eingangsspannungen erheblich erhöht werden. Die Ausgangsspannung $U_L$ der Dividierschaltung DIV wird durch ein entsprechend angepaßtes Tiefpaßfilter TP gefiltert, so daß hochfrequente Rauschanteile unterdrückt sind. In einem nachgeschalteten Analog/Digitalwandler AD2 wird dann die Lagespannung in einen Binärwert umgesetzt. Mit Hilfe einer nachgeordneten, sogenannten Lookup-Tabelle LT wird jedem die Lichtpunktlage darstellenden Binärwert ein die Entfernung angebender Binärwert zugeordnet.

Ferner ist dem Summierverstärker S1 noch ein weiterer Analog/Digitalwandler AD3 nachgeschaltet, an dessen Ausgang dann die Summenspannung $U_S$ als Binärwert dargestellt wird. Hierdurch werden gleichzeitig Meßwerte über die Reflexionseigenschaften der gemessenen Oberfläche in einem sehr großen Meßbereich in der Größenordnung von etwa $1 : 10^6$ erhalten. Ein Maß für die abgegebene Lichtleistung wird bereits aus der Intensitätsregelung als Binärwert erhalten.

Die erhaltenen Binärwerte können nunmehr in einen nachgeschalteten, nicht näher dargestellten Digitalrechner eingelesen und in diesem weiterverarbeitet werden.

**Patentansprüche**

1. Entfernungsmeßanordnung mit optisch-elektronischen Entfernungsmessern zum Integrieren in einem Greifarm eines Roboters, welche je einen Lichtsender (LS) mit gut gebündeltem Lichtstrahl hoher Intensität und je einen Lichtempfänger (LE) mit zugeordnetem positionsempfindlichen Detektor (PSD) enthalten, wobei die Mittenachse (MA) des Lichtsenders (LS) und die optische Achse (OA) des Lichtempfängers (LE) einen vorgegebenen spitzen Winkel (90° - α) miteinander einschließen, und jedem Lichtsender (LS) eine Regelelektronik (PI) sowie jedem Lichtempfänger (LE) eine Verstärkerelektronik zugeschaltet ist, dadurch **gekennzeichnet**, daß

a) bei zwei zueinander parallel arbeitenden Entfernungsmessern symmetrisch zur Mittenachse eines gemeinsamen positionsempfindlichen Detektors (PSD1), welchem jeweils zwei unter einem entsprechenden Winkel zueinander angeordnete Linsensysteme (LI1, LI2) zugeordnet sind, zwei Lichtsender (LS1, LS2) mit je einer Laserdiode (LDS) und je einem Pulselektronikmodul (PM1, PM2) vorhanden sind,

b) zweimal zwei zueinander parallel arbeitender Entfernungsmesser gemäß a) in einem gemeinsamen, relativ sehr kleinen, in der Backe eines Robotergreifarms integrierten Gehäuse unter einem Winkel von 90° vorhanden sind, und

c) die Strahlengänge der insgesamt vier Lichtsender (LS1 bis LS4) und der insgesamt vier Lichtempfänger (LE1 bis LE4) ineinander verflochten sind.

2. Entfernungsmeßanordnung nach Anspruch 1, dadurch **gekennzeichnet**, daß zur Vergrößerung des Leistungsbereichs einer GaAlAs-CW-Laserdiode (LD) in jedem der Lichtsender (LS1 bis LS4) mittels einer Schaltungsanordnung aus einem Differenzverstärker (DV) und einem diesem nachgeschalteten Feldeffekttransistor (FET) der Stromfluß durch jede Laserdiode (LD) geregelt und proportional zu der von jeder Laserdiode (LD) abgegebenen Leistung der Strom ($I_{PD}$) einen jeden optisch an die jeweilige Laserdiode (LD) gekoppelten Photodiode (PD) beeinflußt ist, und daß zur Stabilität der Leistungsabgabe jeder Laserdiode (LD) zwischen dem Ausgang des Differenzverstärkers (DV) und dessen negativen Eingang eine Gegenkopplungsschaltung (NG) vorhanden ist.

3. Entfernungsmeßanordnung nach Anspruch 2, dadurch **gekennzeichnet**, daß in der Gegenkopplungsschaltung (NG) eine Zenerdiode (ZD) und ein Widerstand ($R_2$) in Reihe zwischen den Ausgang dse Differenzverstärkers (DV) und Erdpotential und ein Kondensator (C) zwischen die Verbindung zwischen der Zenerdiode (ZD) und dem Widerstand ($R_2$) und einem negativen Eingang des Differenzverstärkers (DV) geschaltet sind.

**4.** Entfernungsmeßanordnung nach den Ansprüchen 1 bin 3, dadurch **gekennzeichnet**, daß eine Einrichtung (PIR), die zur Pulsintensitätsregelung der CW-Laserdioden (LD) jeder der vier Lichtsender (LS1 bis LS4) Aussteuerbereichsdetektoren ($ABD_1$; $ABD_2$), ein ODER-Glied (OR), eine 4 Bit-Zähler (CT) und einen Digital-Analog-Wandler (LD/A) aufweist, jeweils Ausgangsspannungen ($U_{SL1}$; $U_{SL2}$) von Sample-Hold-Blöcken (S & $H_{SL}$) in je einer Einrichtung zur Offset- und Drift-Kompensation und Ausgangsspannungen ($U_{MP1}$; $U_{MP2}$) von Hochpaßfiltern ($F_2$) in der jeweiligen Einrichtung zur Offset- und Drift-Kompensation jeweils über die Aussteuerbereichsdetektoren ($ABD_1$; $ABD_2$) und das ODER-Glied an den taktgesteuerten Zähler (CT) und dann an den Digital-Analog-Wandler (LD/A) zu einer CW-Regelungsspannung ($U_{LD}$) der Laserdioden (LD) weiterverarbeitet.

## Claims

**1.** Rangefinding arrangement comprising optical-electronic rangefinders for integration in a gripping arm of a robot which each include a light transmitter (LS) with well bundled light beam of high intensity and a light receiver (LE) with associated position-sensitive detector (PSD), the centre axis (MA) of the light transmitter (LS) and the optical axis (OA) of the light receiver (LE) including between them a predetermined acute angle ($90°-\alpha$) and control electronics (PI) being connected to each light transmitter (LS) and amplifier electronics to each light receiver (LE), characterized in that

a) in two rangefinders operating parallel to each other symmetrically to the centre axis of a common position-sensitive detector (PSD1), with which in each case two lens systems (LI1, LI2) arranged at a corresponding angle to each other are associated, two light transmitters (LS1, LS2) each having a laser diode (LDS) and a pulse electronic module (PM1, PM2) are present,

b) two rangefinders according to a) operating parallel to each other are present twice in a common relatively small housing in the jaw of a robot gripping arm at an angle of $90°$, and

c) the beam paths of the total of four light transmitters (LS1 to LS4) and the total of four light receivers (LE1 to LE4) are entwined with each other.

**2.** Rangefinding arrangement according to claim 1, characterized in that to increase the power range of a GaAlAs-Cw laser diode (LD) in each of the light transmitters (LS1 to LS4) by means of a circuit arrangement comprising a differential amplifier (DV) and a field-effect transistor (FET) following the latter the current flow through each laser diode (LD) is controlled and proportionally to the power emitted by each laser diode (LD) the current ($I_{PD}$) of each photodiode (PD) coupled to the respective laser diode (LD) is influenced, and that for the stability of the power output of each laser diode (LD) a feedback circuit (NG) is present between the output of the differential amplifier (DV) and the negative input thereof.

**3.** Rangefinding arrangement according to claim 2, characterized in that in the feedback circuit (NG) a Zener diode (ZD) and a resistor ($R_2$) are connected in series between the output of the differential amplifier (DV) and ground potential and a capacitor (C) is connected between the connection between the Zener diodie (ZD) and the resistor ($R_2$) and a negative input of the differential amplifier (DV).

**4.** Rangefinding arrangement according to claims 1 to 3, characterized in that a means (PIR) which for pulse intensity control of the CW laser diodes (LD) of each of the four light transmitters (LS1 to LS4) comprises level detectors ($ABD_1$; $ABD_2$), an OR member (OR), a 4-bit counter (CT) and a digital-analog converter (LD/A) further processes output voltages ($U_{SL1}$; $U_{SL2}$) of sample-hold blocks (S & $H_{SL}$) in a respective means for offset and drift compensation and output voltages ($U_{MP1}$; $U_{MP2}$) of high-pass filters ($F_2$) in the respective means for offset and drift compensation in each case via the level detectors ($ABD_1$; $ABD_2$) and the OR member to the cycle-controlled counter (CT) and then to the digital-analog converter (LD/A) to form a CW control voltage ($U_{LD}$) of the laser diodes (LD).

## Revendications

**1.** Dispositif de télémétrie muni de télémètres opto-électroniques destinés à être intégrés dans un bras de préhension d'un robot et renfermant un photo-émetteur respectif (LS) à rayon lumineux de forte intensité bien concentré et un photorécepteur respectif (LE) auquel est associé un détecteur (PSD) sensible aux positions, dispositif dans lequel l'axe médian (MA) du photo-émetteur (LS) et l'axe optique (OA) du photorécepteur (LE) forment l'un avec l'autre un angle aigu préétabli ($90°-\alpha$) et dans lequel à chaque photo-émetteur (LS) est adjointe une électronique de régulation (PI) et à chaque photorécepteur (LE) est adjointe une électronique d'amplification, caractérisé par le fait que

    a) lorsque deux télémètres fonctionnent parallèlement l'un à l'autre, deux photo-émetteurs (LS1, LS2) comprenant chacun une diode à laser (LDS) et un module électronique d'impulsions (PM1, PM2) sont présents symétriquement par rapport à l'axe médian d'un détecteur commun (PSD1) sensible aux positions, auquel sont respectivement associés deux systèmes à lentilles (LI1, LI2) mutuellement agencés selon un angle correspondant,

    b) deux fois deux télémètres fonctionnant parallèlement l'un à l'autre, conformément au point a), sont présents selon un angle de 90° dans un boîtier commun relativement très petit, intégré dans la mâchoire d'un bras de préhension d'un robot, et

    c) les trajectoires des rayons des photo-émetteurs (LS1 à LS4), au nombre total de quatre, et des photorécepteurs (LE1 à LE4), au nombre total de quatre, sont imbriquées les unes dans les autres.

2. Dispositif de télémétrie selon la revendication 1, caractérisé par le fait que, en vue d'augmenter la plage de puissance d'une diode à laser (LD) GaAlAs-CW dans chacun des photoémetteurs (LS1 à LS4), un circuit de commutation, comprenant un amplificateur différentiel (DV) et un transistor à effet de champ (FET) branché en aval de ce dernier, a pour effets de réguler le flux de courant circulant par chaque diode à laser (LD) et, proportionnellement à la puissance délivrée par chaque diode à laser (LD), d'influencer le courant ($I_{PD}$) de chaque photodiode (PD) couplée optiquement à la diode à laser (LD) considérée ; et par le fait que, en vue d'assurer la stabilité de la délivrance de puissance de chaque diode à laser (LD), un circuit de contre-couplage (NG) est présent entre la sortie de l'amplificateur différentiel (DV) et l'entrée négative de ce dernier.

3. Dispositif de télémétrie selon la revendication 2, caractérisé par le fait que, dans le circuit de contre-couplage (NG), une diode Zener (ZD) et une résistance ($R_2$) sont branchées en série entre la sortie de l'amplificateur différentiel (DV) et le potentiel de masse, et un condensateur (C) est branché entre la jonction entre la diode Zener (ZD) et la résistance ($R_2$) et une entrée négative de l'amplificateur différentiel (DV).

4. Dispositif de télémétrie selon les revendications 1 à 3, caractérisé par le fait qu'un dispositif (PIR), comprenant, en vue de réguler l'intensité des impulsions des diodes à laser CW (LD) de chacun des quatre photo-émetteurs (LS1 à LS4), des détecteurs ($ABD_1$ ; $ABD_2$) de plages de modulation, un organe OU (OR), un compteur (CT) à 4 bits et un convertisseur numérique-analogique (LD/A), assure respectivement le traitement ultérieur de tensions de sortie ($U_{SL1}$ ; $U_{SL2}$) de blocs d'échantillonnage et de maintien (S & $H_{SL}$) dans un dispositif considéré pour la compensation du décalage et de la dérive, et de tensions de sortie ($U_{MP1}$ ; $U_{MP2}$) de filtres passe-haut ($F_2$) dans le dispositif considéré pour la compensation du décalage et de la dérive, respectivement par l'intermédiaire des détecteurs ($ABD_1$ ; $ABD_2$) de plages de modulation et de l'organe OU, à l'adresse du compteur (CT) commandé par impulsions, puis à l'adresse du convertisseur numérique-analogique (LD/A), pour obtenir une tension de régulation CW ($U_{LD}$) des diodes à laser (LD).

FIG.1

FIG.2

FIG. 3a

FIG. 3b

FIG. 4

FIG.5

FIG.6

FIG.7

FIG. 8

FIG. 9